# EUROPÄISCHE PATENTSCHRIFT

(11) **EP 2 281 137 B1**
(45) Veröffentlichungstag und Bekanntmachung des Hinweises auf die Patenterteilung: **21.11.2012**
(21) Anmeldenummer: 09737836.8
(22) Anmeldetag: 22.04.2009
(51) Int. Cl.: F16L 41/08

(54) **ELASTOMEREINSATZ FÜR EINEN NEBENROHRANSCHLUSS**
ELASTOMER INSERT FOR AN AUXILIARY PIPE CONNECTOR
INSERT ELASTOMERE POUR UN RACCORD DE TUBE SECONDAIRE

(30) Priorität: 29.04.2008 DE 102008021470
(43) Veröffentlichungstag der Anmeldung: 09.02.2011
(73) Patentinhaber: Rehau AG + Co, 95111 Rehau (DE)
(72) Erfinder: SIEBER, Jürgen, 91074 Herzogenaurach (DE); LEIHBECHER, Heiko, 90530 Wendelstein (DE); HENDEL, Roland, 91086 Aurachtal (DE); MEHL, Helmut, 35781 Weilburg (DE)
(86) Internationale Anmeldenummer: PCT/EP2009/002922
(87) Internationale Veröffentlichungsnummer: WO 2009/132792

(56) Entgegenhaltungen:
- WO-A-2005/003615
- DE-A1- 10 146 674
- DE-A1- 10 315 801
- DE-A1- 19 617 437
- DE-C1- 19 955 762
- DE-U1-202006 005 685
- US-A- 2 915 110
- US-A- 5 096 206

## Beschreibung

Die Erfindung bezieht sich auf einen Elastomereinsatz für einen Nebenrohranschluss in einer Rohrwand-Queröffnung einer durchbohrten Betonwand einer Hauptrohrleitung, eines Schachtes oder dergleichen.

Ein solcher Elastomereinsatz ist aus der EP 0 795 712 B1 als Teil einer Anschlussvorrichtung bekannt und umfasst eine Ringwand, die dem Elastomereinsatz eine hohlstopfenförmige Ausbildung verleiht. Die Außenfläche der Ringwand ist mit umlaufenden Rillen versehen, um in der Rohrwand-Queröffnung guten Halt zu finden. Die Innenfläche des Elastomereinsatzes weist einen mit Schraubwindungen besetzten, konischen Bereich auf, der mit einem korrespondierenden, mit Schraubwindungen besetzten konischen Bereich eines Anschlussstutzens zusammen arbeitet, um die Ringwand des Elastomereinsatzes an die durchbohrte Rohrbetonwand anzupressen und damit abzudichten. Ein ähnlicher Elastomereinsatz, allerdings ohne Schraubwindungen, ist auch aus der WO 2005/003615 A1 bekannt. Diese lehrt, ein unter dem Einfluss von Wasser quellfähiges Material als zusätzliche Dichtung zwischen dem Anschlussstutzen und dem Elastomereinsatz anzuordnen.

Während sich diese Anschlussvorrichtung bewährt hat, sind weitere Verbesserungen der Abdichtung wünschenswert. In der Praxis stellt nämlich der Nebenrohranschluss, der die Einleitungsstelle von Hausabwässern in den gemeindlichen Sammelkanal darstellt, die problematischste Stelle für Kanalundichtigkeiten dar. Deshalb ist es wünschenswert, den Nebenanschluss so sicher wie möglich zu gestalten und die Mittel hierzu bereitzustellen.

Der Erfindung liegt die Aufgabe zugrunde, einen Elastomereinsatz für einen Nebenrohranschluss in einer durchbohrten Betonwand zu schaffen, mit dem sich der Nebenrohranschluss sicher abdichten lässt.

Die gestellte Aufgabe wird aufgrund der Merkmale des Hauptanspruchs gelöst und durch die weiteren Merkmale der abhängigen Ansprüche ausgestaltet und weitergebildet.

Im Einzelnen enthält die Elastomer-Ringwand umlaufende Zonen mit quellfähigem Material, das mit Wasser reagiert, um Undichtigkeiten an der durchbohrten Betonwand oder am Nebenrohranschluss abzudichten. Wenn sich also trotz der Dehnung des Elastomereinsatzes beim Einschrauben des Anschlussstutzens noch Lücken zwischen der durchbohrten Betonwand und dem Elastomereinsatz ergeben sollten, durch welche Wasser durchsickern könnte, dann reagiert dieses mit dem quellfähigen Material und führt nach einiger Zeit zum druckdichten Verschließen der Lücken. In ähnlicher Weise werden Lücken zwischen den Schraubwindungen des Anschlussstutzens und des Elastomereinsatzes geschlossen, wenn hindurchtretendes Wasser mit dem quellfähigen Material reagiert. Durchgeführte Versuche haben ergeben, dass nach anfänglicher Undichtheit und einer gewissen Reaktionszeit der Quelldichtung ein dichter Anschluß erreicht werden kann.

Der Elastomereinsatz ist im Verhältnis zum Anschlussstutzen relativ weich, um zu Abdichtungszwecken leichter verformbar zu sein, d. h. sich den Unebenheiten der durchbohrten Betonwand und den Herstellungsungenauigkeiten von Schraubwindungen anpassen zu können. Je weicher das Material des Elastomereinsatzes ist, um so leichter wird die Anpassung an die Gegenformen von durchbohrter Betonwand und Anschlussstutzen. Sehr weiches Elastomermaterial führt jedoch zu einer Strukturschwäche der Anschlussverbindung, und die Erfindung befasst sich auch damit, eine solche Anschlussschwäche trotz verbesserter Abdichtung zu vermeiden. Gemäß Erfindung kann die Elastomer-Ringwand aus unterschiedlich hartem Material bestehen. Solche unterschiedliche Härtebereiche können etwa durch Ko-Spritzguss in Form von zwei oder mehreren Schichten bei der Füllung der Form zur Herstellung des Elastomereinsatzes hergestellt werden. Während die weiche Schicht die Anpassung an die Unebenheiten der benachbarten Elemente zu dem Elastomereinsatz gewährleisten, sorgt die härtere Schicht für Strukturstabilität.

Unabhängig von der Weich/Hart-Paarung ist es auch möglich, Schichten, z.B. die Innenschicht und die Außenschicht aus unterschiedlichen Elastomeren aufzubauen. Damit kann unterschiedlichen Empfindlichkeiten gegenüber aggressiven Medien vorgebeugt werden. Wenn beispielsweise Öl in dem Abwasser zu erwarten ist, kann der Bereich benachbart der Einwirkzone aus entsprechendem unempfindlichem Material hergestellt werden.

Die umlaufenden Zonen mit quellfähigem Material sind als eine in eine Nut einlegbare Dichtung ausgebildet, es ist aber auch möglich, die Elastomer-Ringwand vollständig, oder wenigstens in Teilen, aus einer Elastomer-Matrix mit eingelagertem quellfähigem Material herzustellen.

Ein Ausführungsbeispiel der Erfindung wird anhand der Zeichnung beschrieben. Dabei zeigt:
- Fig. 1: einen Elastomereinsatz in einer Rohrwand-Queröffnung, geschnitten,
- Fig. 2: eine Ausschnittvergrößerung aus Fig. 1 und

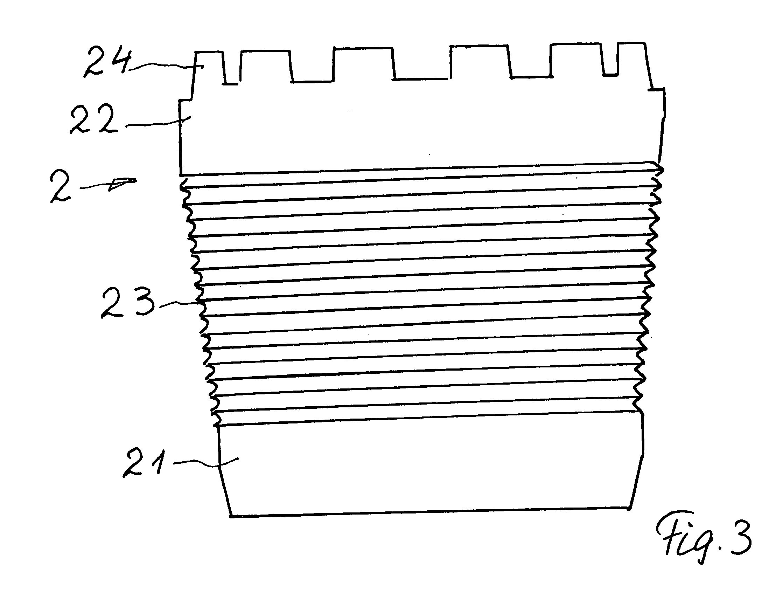

- Fig. 3: eine Ansicht eines Anschlussstutzens.

Ein Nebenrohranschluss zu einer Hauptrohrleitung umfasst einen Elastomereinsatz 1 und einen Anschlussstutzen 2, der die Verbindung zu einer nicht dargestellten Nebenrohrleitung herstellt. Der Anschlussstutzen 2 ist hohlstopfenförmig ausgebildet und weist ein Spitzende 21 und ein Muffenende 22 auf, zwischen denen sich ein konischer Verschraubungsbereich 23 erstreckt. Am Muffenende 22 ist ein Kranz von Klauen 24 vorgesehen, mit deren Hilfe sich der Anschlussstutzen 2 in den Elastomereinsatz 1 einschrauben lässt. Das Muffenende 22 besitzt einen nicht dargestellten, ringförmigen Muffenhohlraum mit Umlaufdichtung, um ein eingestecktes Nebenrohr anzuschließen, wie es bei Rohrleitungen bekannt ist.

Der Elastomereinsatz 1 ist in einer durchbohrten Betonwand 3, die hier als Rohrwand-Queröffnung 30 ausgebildet ist, einsetzbar. Da die Queröffnung 30 eine rundzylindrische Rohrwand durchsetzt, weisen die Durchbrechungskanten 31, 32 eine Sattelform auf. Die Betonwand 3 weist gewöhnlich eine Armierung auf und ist auch wegen der verarbeiteten Steine inhomogen. Wenn Hausanschlüsse zu verlegen sind, wird die Rohrwand quer durchbohrt, was mitunter zu Unregelmäßigkeiten in der Queröffnung 30 führen kann. Es ist die Aufgabe des Elastomereinsatzes, das Betonrohr 3 trotz solcher Unregelmäßigkeiten in der Queröffnung 30 sicher abzudichten.

Der Elastomereinsatz 1 weist eine Ringwand 10 mit einer Außenfläche 11 und einer Innenfläche 12 auf. Zum Nebenrohranschluss hin weist der Elastomereinsatz einen Abdeckflansch 13 auf, der sich um die Durchdringungskante 31 herum erstreckt und diese abdeckt. Zum Inneren 33 der Hauptrohrleitung hin weist der Elastomereinsatz einen Fortsatz 14 auf, der parallel zur Durchdringungskante 32 beschnitten ist, damit der Elastomereinsatz möglichst wenig in das Innere 33 der Hauptrohrleitung 3 hineinragt.

Die Außenfläche 12 des Elastomereinsatzes ist mit umlaufenden Rillen 15 besetzt, vorzugsweise mit solchen, die zum Inneren 33 der Hauptrohrleitung gerichtete Zacken ausbilden. Ferner ist eine umlaufende Presslippendichtung 16 nahe des Endes der Ringwand 10 vorgesehen, jedoch so, dass die Presslippendichtung 16 sicher in der Leibung der Querbohrung 30 zu liegen kommt.

Die umlaufende Innenfläche 12 des Elastomereinsatzes weist einen mit Schraubwindungen besetzten, konischen Bereich 17 auf, der an den Verschraubungsbereich 23 des Anschlussstutzens 2 angepasst ist. Benachbart zum konischen Schraubbereich 17 erstreckt sich ein Kammerbereich 18, der durch eine innenliegende Presslippendichtung 19 begrenzt wird, die zur Zusammenarbeit mit dem Spitzende 21 des Anschlussstutzens 2 ausgelegt ist.

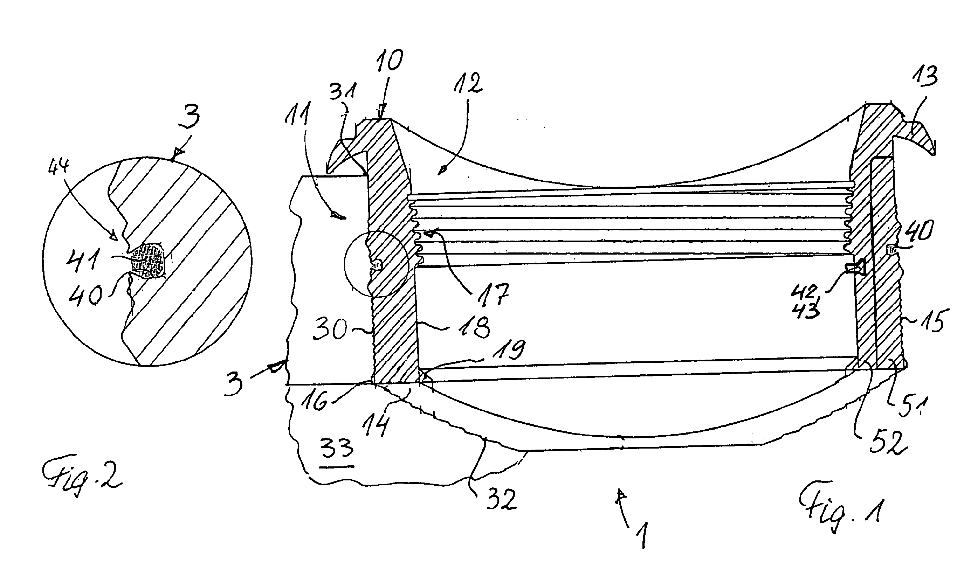

An der Ringwandaußenseite 11 ist eine umlaufende Nut 40 vorgesehen, die in Fig. 2 vergrößert dargestellt ist und eine eingelegte Dichtung 41 enthält, deren Material mit Wasser reagiert und dabei aufquillt. Das quellfähige Material ist hydrophil und wird beispielsweise auch als Absorber oder Superabsorber bezeichnet. Wie aus Fig. 2 ersichtlich, weist die Nut 40 etwas Hinterschnitt auf, damit das quellfähige Material 41 sicher gehalten wird. Die Öffnungsbreite der Nut 40 in Höhe der Außenfläche des Elastomereinsatzes 1 ist somit zweckmäßig kleiner als die maximale Breite der Nut 40. Bei Zutritt von Feuchtigkeit quillt das Material 41 auf und tritt aus der Nut 40 heraus, um sich sperrend in eventuell vorhandene Lücken zwischen der Außenseite 11 und der Leibung der Querbohrung 30 auszubreiten.

Unmittelbar ober- und unterhalb der Nut 40 ist jeweils mindestens eine Dichtlippe 44 angeordnet, die bei Aktivierung der Quelldichtung an die Lochleibung gepresst werden.

Auch die Innenseite 12 kann zusätzlich mit Quellmittel abgedichtet werden. Hierzu kann eine weitere Nut 42 vorgesehen sein, in die ein Ring 43 aus quellfähigem Material eingesteckt wird. Die Nut 42 ist vorzugsweise im Ringbereich 18 des Elastomereinsatzes untergebracht, die zusätzliche Abdichtstelle 42, 43 könnte aber auch im konischen Schraubbereich 17 untergebracht werden.

Nebenrohranschlüsse sind häufig durch Wurzelwachstum gefährdet. Um Wurzeln am Eindringen in Spalten zu hindern, können chemische und biologisch wirksame Zusatzmittel angewendet werden. Man kann diese wachstumshemmenden Zusatzmittel in gesonderten Nuten unterbringen oder die Zusatzmittel dem quellfähigen Material zumischen oder dem Elastomer des Einsatzes in fein verteilter Form bei der Herstellung zusetzen.

Der Elastomereinsatz kann aus zwei oder mehreren Elastomerkomponenten bestehen. So ist es möglich, Bereiche, die Öl oder anderen aggressiven Materialien ausgesetzt sind, aus einem passenden Elastomermaterial zu fertigen, während anderen Bereiche des Elastomereinsatzes aus einem der örtlichen Umgebung angepassten, wirtschaftlichen Material bestehen können. Als Materialien kommen EPDM oder NBR in Betracht.

Als weitere Variante kann eine Hart/Weich-Kombination der Materialien in der Ringwand 10 vorgenommen werden. Für die Hart/Weich-Kombination müssen keine unterschiedlichen Elastomere in Betracht gezogen werden, es ist auch möglich, den gleichen Elastomer in unterschiedlich eingestellter Härte zu verwenden. Als Ausführungsbeispiel ist in Fig. 1 eine Außenschicht 51 aus weicherem Elastomer und eine Innenschicht 52 aus härterem Material vorgesehen. Es sei bemerkt, dass das sogenannte härtere Material der Schicht 52 immer noch weich gegenüber der Härte des Anschlussstutzens 2 gewählt wird. Die Hart/Weich-Kombination hat den Vorteil, dass die Spannkraft des Elastomereinsatzes über einen größeren Toleranzbereich der Queröffnung 30 erzielt werden kann, ohne dass es zu einer Schwächung der Verbindung des Nebenrohranschlusses an die Hauptrohrleitung kommt. Bei der Verwendung von weicheren Elastomerschichten verlaufen die Feder-Kennlinien nicht so steil wie bei härteren Materialien.

Es ist auch möglich, die Elastomer-Ringwand mit Schichtzonen aus eingelagertem, quellfähigem Material herzustellen, indem die Herstellungsform für den Elastomereinsatz in Schichten mit entsprechendem Material gefüllt wird.

## Patentansprüche

1. Elastomereinsatz für einen Nebenrohranschluss in einer durchbohrten Betonwand (30) einer Hauptrohrleitung (3), eines Schachtes oder dergleichen, mit folgenden Merkmalen:
der Elastomereinsatz (1) ist mit einer Ringwand (10) hohlstopfenförmig ausgebildet und weist eine umlaufende Außenfläche (11) sowie eine umlaufende Innenfläche (12) auf;
die Außenfläche (11) ist mit umlaufenden Rillen (15) versehen;
die Innenfläche (12) weist einen konischen Bereich (17) auf, der sich von der Anschlussseite zum Inneren (33) der Hauptrohrleitung (3) verjüngt;
wobei die Elastomer-Ringwand (10) umlaufende Zonen mit quellfähigem Material (43) enthält, das mit Wasser reagiert, um Undichtigkeiten am Nebenrohranschluss abzudichten;
die Innenfläche (12) ist mit mehreren Schraubwindungen von Innengewinde besetzt;
wobei an der Ringwand-Außenfläche (11) wenigstens eine umlaufende Nut (40) vorgesehen ist, die zum Halten einer eingelegten Dichtung ausgebildet ist, welche mit Wasser quellfähiges Material (41) enthält, um Undichtigkeiten an der durchbohrten Betonwand (30) abzudichten,
**dadurch gekennzeichnet, dass**
unmittelbar ober- und unterhalb der Nut (40) jeweils mindestens eine Dichtlippe (44) angeordnet ist, die bei Aktivierung der Quelldichtung an die Lochleibung der durchbohrten Beton wand (30) gepresst werden.

2. Elastomereinsatz nach Anspruch 1, **dadurch gekennzeichnet, dass** die Öffnungsbreite der Nut (40) in Höhe der Außenfläche (11) des Elastomereinsatzes kleiner ist als die maximale Breite der Nut (40).

3. Elastomereinsatz nach einem der Ansprüche 1 oder 2, **dadurch gekennzeichnet, dass** die Ringwand-Innenfläche (12) wenigstens eine umlaufende Nut (42) zum Halten einer eingelegten Dichtung mit quellfähigem Material (43) aufweist.

4. Elastomereinsatz nach einem der Ansprüche 1 bis 3, **dadurch gekennzeichnet, dass** die Elastomer-Ringwand (10) aus einer Innenschicht (52) und einer Außenschicht (51) aufgebaut ist, die aus unterschiedlich hartem Material bestehen.

5. Elastomereinsatz nach einem der Ansprüche 1 bis 4, **dadurch gekennzeichnet, dass** die Elastomer-Ringwand (10) aus Schichtbereichen aufgebaut ist, die aus unterschiedlichen Elastomeren bestehen.

6. Elastomereinsatz nach einem der Ansprüche 1 bis 5, **dadurch gekennzeichnet, dass** die Elastomer-Ringwand (10) vollständig, oder wenigstens in Teilen, aus einer Elastomer-Matrix mit eingelagertem, quellfähigem Material besteht.

7. Elastomereinsatz nach einem der Ansprüche 1 bis 6, **dadurch gekennzeichnet, dass** die Elastomer-Ringwand (10) umlaufende Zonen mit Hemmstoffen des Wurzelwachstums aufweist.

8. Elastomereinsatz nach einem der Ansprüche 1 bis 7,**dadurch gekennzeichnet, dass** an der Ringwand-Außenseite (11), zum Nebenrohranschluss (2) hin, ein Abdeckflansch (13) für die Betonwand-Außenseite und, zum Inneren (33) der Hauptrohrleitung (3) hin, eine oder mehrere umlaufende Presslippen (16) angeformt sind.

9. Elastomereinsatz nach einem der Ansprüche 1 bis 8, **dadurch gekennzeichnet, dass** an der Ringwand-Innenseite (12), zum Inneren (33) der Hauptrohrleitung(3) hin, mindestens eine umlaufende Presslippe (19) an solcher Stelle angeformt ist, die noch innerhalb der Rohrwand-Queröffnung (30) liegt, wobei zwischen dem mit Schraubwindungen besetzten konischen Bereich (17) des Elastomereinsatzes (1), dem Nebenanschluss (2) und der innenseitigen Presslippe (19) eine Kammer (18) gebildet wird, in die sich quellfähiges Material (43) bei Reaktion mit Wasser ausdehnen kann.

## Claims

1. Elastomer insert for an auxiliary pipe connector in a pierced concrete wall (30) of a main pipeline (3), shaft or the like, with the following features:
the elastomer insert (1) is designed in the form of a cap plug with an annular wall (10) and has an encircling outer surface (11) and an encircling inner surface (12);
the outer surface (11) is provided with encircling flutes (15);
the inner surface (12) has a conical region (17) which tapers from the connector side to the interior (33) of the main pipeline (3);
wherein the elastomer annular wall (10) contains encircling zones with swellable material (43) which reacts with water to seal off leaks on the auxiliary pipe connector;
the inner surface (12) is occupied with a plurality of internal thread screw turns;
wherein the annular wall outer surface (11) is provided with at least one encircling groove (40) which is designed for holding an inserted seal, which contains material (41) which is swellable with water, in order to seal off leaks at the pierced concrete wall (30),
**characterized in that** at least one sealing lip (44) is arranged in each case directly above and below the groove (40), said sealing lips being pressed onto the hole area of the pierced concrete wall (30) upon activation of the swelling seal.

2. Elastomer insert according to Claim 1, **characterized in that** the opening width of the groove (40) level with the outer surface (11) of the elastomer insert is smaller than the maximum width of the groove (40).

3. Elastomer insert according to either of Claims 1 and 2, **characterized in that** the annular wall inner surface (12) has at least one encircling groove (42) for holding an inserted seal containing swellable material (43).

4. Elastomer insert according to one of Claims 1 to 3, **characterized in that** the elastomer annular wall (10) is constructed from an inner layer (52) and an outer layer (51) which are composed of material of differing hardness.

5. Elastomer insert according to one of Claims 1 to 4, **characterized in that** the elastomer annular wall (10) is constructed from layer regions composed of different elastomers.

6. Elastomer insert according to one of Claims 1 to 5, **characterized in that** the elastomer annular wall (10) is completely, or at least in parts, composed of an elastomer matrix with embedded swellable material.

7. Elastomer insert according to one of Claims 1 to 6, **characterized in that** the elastomer annular wall (10) has encircling zones with root growth inhibitors.

8. Elastomer insert according to one of Claims 1 to 7, **characterized in that** a covering flange (13) for the concrete wall outer side is integrally formed on the annular wall outer side (11), towards the auxiliary pipe connector (2), and one or more encircling pressing lips (16) are integrally formed on said annular wall outer side, towards the interior (33) of the main pipeline (3).

9. Elastomer insert according to one of Claims 1 to 8, **characterized in that** at least one encircling pressing lip (19) is integrally formed on the annular wall inner side (12), towards the interior (33) of the main pipeline (3), at a location which is still located within the pipe wall transverse opening (30), wherein a chamber (18), into which swellable material (43) can expand upon reaction with water, is formed between the conical region (17), which is occupied by screw turns, of the elastomer insert (1), the auxiliary connector (2) and the inner pressing lip (19).

## Revendications

1. Insert élastomère pour un raccord de tube secondaire dans une paroi en béton percée (30) d'une conduite tubulaire principale (3), d'un puits ou similaire, comprenant les caractéristiques suivantes :
l'insert élastomère (1) est réalisé avec une paroi annulaire (10) en forme de bouchon creux, et présente une surface extérieure périphérique (11) ainsi qu'une surface intérieure périphérique (12) ;
la surface extérieure (11) est pourvue de rainures périphériques (15) ;
la surface intérieure (12) présente une région conique (17) qui se rétrécit depuis le côté de raccordement jusqu'à l'intérieur (33) de la conduite tubulaire principale (3) ;
la paroi annulaire élastomère (10) contenant des zones périphériques avec un matériau capable de gonfler (43), qui réagit avec l'eau, pour étancher les défauts d'étanchéité au niveau du raccord de tube secondaire ;
la surface intérieure (12) est munie de plusieurs enroulements hélicoïdaux de filetages internes ;
au moins une rainure périphérique (40) étant prévue au niveau de la surface extérieure (11) de la paroi annulaire, laquelle rainure est réalisée pour retenir une garniture d'étanchéité incorporée, qui contient un matériau (41) capable de gonfler à l'eau, afin d'étancher les défauts d'étanchéité au niveau de la paroi en béton percée (30),
**caractérisé en ce que**
directement au-dessus ou en dessous de la rainure (40) est disposée à chaque fois au moins une lèvre d'étanchéité (44) qui est pressée lors de l'activation de la garniture d'étanchéité capable de gonfler contre l'ébrasement du trou de la paroi en béton percée (30).

2. Insert élastomère selon la revendication 1, **caractérisé en ce que** la largeur d'ouverture de la rainure (40) à la hauteur de la surface extérieure (11) de l'insert élastomère est inférieure à la largeur maximale de la rainure (40).

3. Insert élastomère selon l'une quelconque des revendications 1 ou 2, **caractérisé en ce que** la surface intérieure (12) de la paroi annulaire présente au moins une rainure périphérique (42) pour retenir une garniture d'étanchéité incorporée avec un matériau capable de gonfler (43).

4. Insert élastomère selon l'une quelconque des revendications 1 à 3, **caractérisé en ce que** la paroi annulaire élastomère (10) est constituée d'une couche intérieure (52) et d'une couche extérieure (51) qui se composent d'un matériau de dureté différente.

5. Insert élastomère selon l'une quelconque des revendications 1 à 4, **caractérisé en ce que** la paroi annulaire élastomère (10) est constituée de régions de couches qui se composent d'élastomères différents.

6. Insert élastomère selon l'une quelconque des revendications 1 à 5, **caractérisé en ce que** la paroi annulaire élastomère (10) se compose complètement, ou au moins en partie, d'une matrice élastomère avec un matériau capable de gonfler intercalé.

7. Insert élastomère selon l'une quelconque des revendications 1 à 6, **caractérisé en ce que** la paroi annulaire élastomère (10) présente des zones périphériques avec des substances inhibitrices de la croissance des racines.

8. Insert élastomère selon l'une quelconque des revendications 1 à 7, **caractérisé en ce que**, sur le côté extérieur (11) de la paroi annulaire, en direction du raccord de tube secondaire (2), est formée une bride de recouvrement (13) pour le côté extérieur de la paroi en béton, et vers l'intérieur (33) de la conduite tubulaire principale (3), sont formées une ou plusieurs lèvres de pressage périphériques (16).

9. Insert élastomère selon l'une quelconque des revendications 1 à 8, **caractérisé en ce que** sur le côté intérieur (12) de la paroi annulaire, en direction de l'intérieur (33) de la conduite tubulaire principale (3), est formée au moins une lèvre de pressage périphérique (19) à un endroit qui se situe encore à l'intérieur de l'ouverture transversale (30) de la paroi tubulaire, une chambre (18) étant formée entre la région conique (17) pourvue des enroulements hélicoïdaux de l'insert élastomère (1), le raccord secondaire (2) et la lèvre de pressage (19) du côté intérieur, du matériau capable de gonfler (43) par réaction avec l'eau pouvant se dilater dans ladite chambre. ¹
